# EUROPÄISCHE PATENTSCHRIFT

(11) **EP 1 652 701 B1**
(45) Veröffentlichungstag und Bekanntmachung des Hinweises auf die Patenterteilung: **01.07.2009**
(21) Anmeldenummer: 05022074.8
(22) Anmeldetag: 11.10.2005
(51) Int. Cl.: B60H 1/00

(54) **Bedieneinrichtung**
Control unit
Dispositif de commande

(30) Priorität: 28.10.2004 DE 102004052465
(43) Veröffentlichungstag der Anmeldung: 03.05.2006
(73) Patentinhaber: Behr GmbH & Co. KG, 70469 Stuttgart (DE)
(72) Erfinder: Görner, Wolfgang, 74321 Bietigheim-Bissingen (DE)

(56) Entgegenhaltungen:
- EP-A- 1 398 186
- DE-A1- 10 062 931
- DE-A1- 10 127 211
- DE-A1- 19 542 913
- DE-A1- 19 840 070
- DE-U1- 20 314 364
- GB-A- 645 725
- US-A- 5 931 378

## Beschreibung

Die Erfindung betrifft eine beleuchtbare Bedieneinrichtung, insbesondere für eine Kraftfahrzeug- Belüftungs-, Heizungs-, und/oder Klimatisierungseinrichtung gemäß dem Oberbegriff des Anspruchs 1.

Aus dem Stand der Technik ist eine Vielzahl von Einrichtungen zur Bedienung von Belüftungs-, Heizungs-, und/oder Klimatisierungseinrichtungen von Kraftfahrzeugen bekannt. Diese sind mit Bedienelementen in Form von Drehknöpfen, Schiebem oder Druckschaltem ausgestattet, um dem Benutzer die Möglichkeit zu bieten, wesentliche Zustandsgrößen zur Konditionierung des Fahrzeuginnenraums einstellen zu können.

Um dies auch bei Fahrten in der Dunkelheit oder Dämmerung zu ermöglichen sind Bedienelemente beziehungsweise die Bedieneinrichtung beleuchtet. Der Fahrzeuginsasse sollte dabei zumindest die einzelnen Bedienelemente, deren eingestellte Position und den möglichen Einstellungsbereich erkennen können. Als Beleuchtungselemente dienen dazu Leuchtdioden, kleine Glühlampen oder ähnliches.

Zur Beleuchtung von Funktion und Einstellung eines Drehknopfs sind aus der DE 198 40 070 zwei getrennte Beleuchtungsmittel bekannt, wobei zumindest ein Beleuchtungsmittel als sogenanntes Funktionsbeleuchtungsmittel und zumindest ein zweites Beleuchtungsmittel als Suchbeleuchtungsmittel dient. Das Licht zur Funktionsbeleuchtung wird über ein, mit dem Betätigungsmittel mitbewegten, Drehübertragungselement eingekoppelt.

Ferner ist beispielsweise aus der deutschen Offenlegungsschrift DE 100 62 931 ein Drehknopf als Bedienelement bekannt, der nur mit einer einzigen Lichtquelle zur Beleuchtung auskommt, diese jedoch nur ein Funktionssymbol oder eine Markierung des Drehknopfs beleuchtet, nicht jedoch den gesamten Einstellbereich. Die elektrische Lichtquelle ist direkt in den Drehknopf integriert und beansprucht dementsprechend Platz im Verbindungsbereich des Drehknopfs mit dem Bedienteil.

Eine Anordnung, die mit einer Lichtquelle sowohl eine Markierung eines Drehknopfs als auch mindestens ein beleuchtetes Element des Bedienelements ausleuchtet ist aus der deutschen Offenlegungsschrift DE 101 27 211 A1 bekannt. Der Drehknopf des Bedienelements ist dabei über ein lichtleitendes Drehübertragungselement mit einem auf einer Trägerplatte angeordneten Schalt- oder Einstellelement mechanisch gekoppelt. Mit anderen Worten bedeutet dies, dass Teile der Beleuchtungseinrichtung des Bedienelements mit dem Bedienelement mitbewegt werden. Ein ähnlicher Aufbau eines Bedienelements wird auch in der deutschen Patentschrift DE 195 42 913 beschrieben, Die jeweiligen Durchführungselemente der Bedienelemente müssen zumindest in einem gewissen Bereich lichtdurchlässig ausgebildet sein.

DE 203 14 364 offenbart eine Bedieneinrichtung nach dem Oberbegriff des Anspruchs 1.

Es ist Aufgabe der Erfindung, eine in ihrem Aufbau einfache, Beleuchtungsmöglichkeit für Einstellelemente einer Bedieneinrichtung zur Verfügung zu stellen.

Diese Aufgabe wird gelöst durch eine Bedieneinrichtung, insbesondere für eine Kraftfahrzeug- Belüftungs-, Heizungs-, und/oder Klimatisierungseinrichtung mit den Merkmalen des Anspruchs 1. Vorteilhafte Ausgestaltungen sind Gegenstand der Unteransprüche.

Die Bedieneinrichtung, insbesondere für eine Kraftfahrzeug- Belüftungs-, Heizungs-, und/oder Klimatisierungseinrichtung weist mindestens ein bewegbares Bedienelement zur Einstellung einer Zustandsgröße auf. Dem Bedienelement sind ein Markierungsbereich und ein Positionierungsbereich zugeordnet, welche mittels einer Vorrichtung zur Beleuchtung mit Licht versorgt werden. Das Bedienelement deckt den Positionierungsbereich teilweise ab. Der Abdeckungsbereich ändert sich in Abhängigkeit von der Position des Einstelleiements.

Vorteilhafterweise bildet das Bedienelement zumindest einen Teil der Berandung des Markierungs- und/oder Positionierungsbereichs. Der Markierungsbereich und der Positionierungsbereich sind insbesondere konzentrisch zueinander angeordnet, wobei diese unmittelbar aneinander angrenzen können. In einer alternativen Ausführungsform, beispielsweise wenn das Bedienelement als Schieberegler ausgeführt wird, erweist es sich als vorteilhaft, wenn der Markierungsbereich und der Positionierungsbereich parallel zueinander angeordnet sind, wobei auch in diesem Fall die beiden Bereiche direkt aneinander angrenzen können.

Bevorzugt ist eine Vorrichtung zur Beleuchtung bezüglich der Bedieneinrichtung ortsfest angeordnet. Diese Beleuchtungsvorrichtung ist dazu vorgesehen den Markierungs- und Positionierungsbereich mit Licht zu versorgen, wobei für ein Bedienelement eine Mehrzahl an Beleuchtungsmittel vorgesehen ist. In einer Minimalversion kann für ein Bedienelement auch jeweils nur ein Beleuchtungsmittel vorgesehen sein. Insbesondere ist es auch möglich die gesamte Bedieneinheit, also die Gesamtheit an Bedienelementen, mittels eines ßeleuchtungsmittels mit Licht zu versorgen. Als Beleuchtungsmittel kommen beispielsweise Leuchtdioden oder kleine Glühlampen zum Einsatz. Für eine Anordnung der Beleuchtungsmittel unabhängig von den Bedienelementen ist es vorteilhaft, das Licht über Lichtleiter von der Lichtquelle zu den Bedienelementen zu führen, wobei die Beleuchtung des Markierungs- und Positionierungsbereich eines Bedienelements über einen gemeinsamen Lichtleiter erfolgen kann.

Die Beleuchtungsmittel können vorteilhafterweise hinter der Grundplatte der Bedieneinrichtung montiert werden und beanspruchen keinen Bauraum im Verbindungsbereich der Bedienelemente mit der Bedieneinrichtung Insbesondere mechanische und/oder elektrische Verbindungs- oder Übertragungsmittel der Bedienelemente können so an zentraler Stelle eingebaut werden, wobei eine eventuelle Lichtdurchlässigkeit unerheblich beziehungsweise nicht erforderlich ist.

Als mögliche Ausführungsformen für die Bedienelemente kommen alle Arten von drehverstellbaren Bedienelementen wie beispielsweise Drehknöpfen, - reglem oder -schalter in Betracht. Dabei können diese insbesondere ring-, scheiben- oder tellerförmig ausgeführt werden. Ebenso kann gemäß einer weiteren erfindungsgemäßen Variante das Bedienelement als geradlinig verstellbarer Schieberegler, -schalter oder ähnliches ausgeführt sein.

Die Vorrichtung zur Beleuchtung weist eine Mehrzahl von lichtdurchlässigen Fenstern auf, die beispielsweise in der Grundplatte der Bedieneinrichtung beziehungsweise im sichtbaren Abdeckbereich jeweils flächenübergreifend im Markierungs- und Positionierungsbereich angeordnet sind. Diese Fenster sind also Teil dieser beiden Bereiche und ragen insbesondere jeweils zur Hälfte in diese hinein. Die einzelnen lichtdurchlässigen Fenster sind einteilig oder mehrteilig, insbesondere zweigeteilt ausgeführt, wobei bei geteilter Ausführung die unterschiedlichen Teile aus unterschiedlich gefärbten Materialien, insbesondere Farbfiltem bestehen können. So können die Fenster beispielsweise im Grenzbereich zwischen Markierungs- und Positionierungsbereich geteilt sein, wobei Fensterteile die im Markierungsbereich liegen jeweils gleich Einfärbung und Teile die im Positionierungsbereich liegen, unterschiedliche Färbungen entlang des Verstellwegs des Bedienelements auf weisen können. Im Grenzbereich zwischen Markierungs- und Positionierungsbereich, ist es vorteilhaft einen lichtundurchlässigen Steg zwischen den Fensterteilen anzuordnen.

Das Bedienelement ist vorzugsweise zumindest im Positionierungsbereich lichtundurchlässig ausgeführt und zumindest in einem Bereich mit einer Ausnehmung versehen, die den Positionierungsbereich freigibt, wobei die Breite der Ausnehmung in etwa dem Abstand der lichtdurchlässigen Fenster entspricht. Die Ausnehmung am Bedienelement repräsentiert abhängig von der Stellung des Bedienelements eine bestimmte eingestellte Größe beispielsweise korrespondierend zu einer ortsfesten Skala oder Symbolik an der Bedieneinrichtung, die ebenfalls beleuchtet sein können.

Die erfindungsgemäße Bedieneinrichtung umfasst zumindest ein Bedienelement welches zur Einstellung folgender Zustandsgrößen Verwendung findet: Temperatur, Gebläsestärke, Ausströmbereich oder die Art der Ausströmung.

Eine Kraftfahrzeug- Belüftungs-, Heizungs-, und/oder Klimatisierungseinrichtung weist vorteilhafterweise eine erfindungsgemäße Bedieneinrichtung zur Einstellung und Anzeige der oben beschriebenen Zustandsgrößen auf, wobei die Kraftfahrzeug- Belüftungs-, Heizungs-, und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand eines Ausführungsbeispiels unter Bezugnahme auf die Zeichnung im Einzelnen erläutert. Es zeigen:
- Fig.1: Eine Vorderansicht einer erfindungsgemäßen Bedieneinrichtung und
- Fig.2: eine vergrößerte Ansicht des Bedienelements zur Temperaturwahl gemäß dem in Fig.1 dargestellten Ausführungsbeispiel.
- Fig.3: eine vergrößerte Ansicht des Bedienelements zur Temperaturwahl gemäß einem zweiten Ausführungsbeispiel.
- Fig.4: eine vergrößerte Ansicht des Bedienelements zur Temperaturwahl gemäß einem dritten Ausführungsbeispiel.

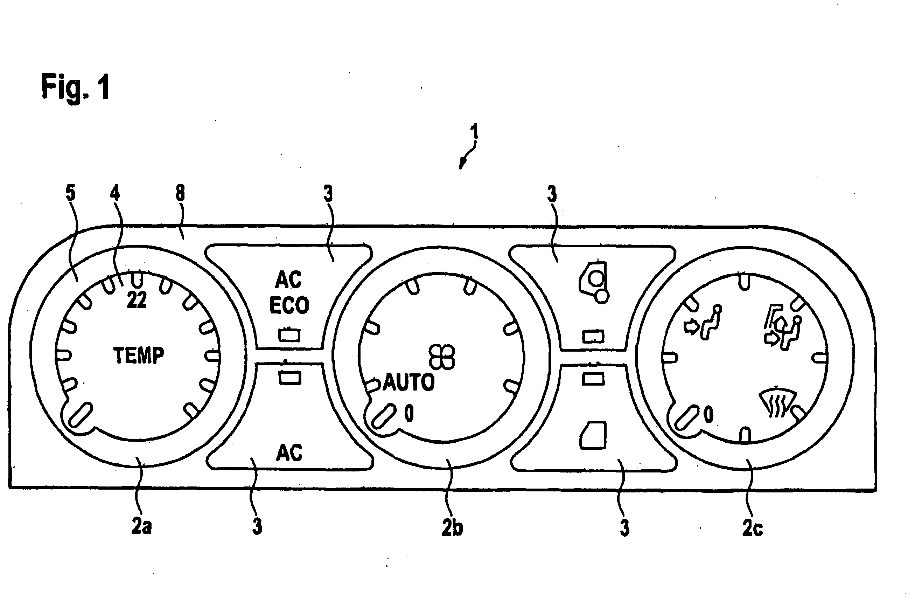

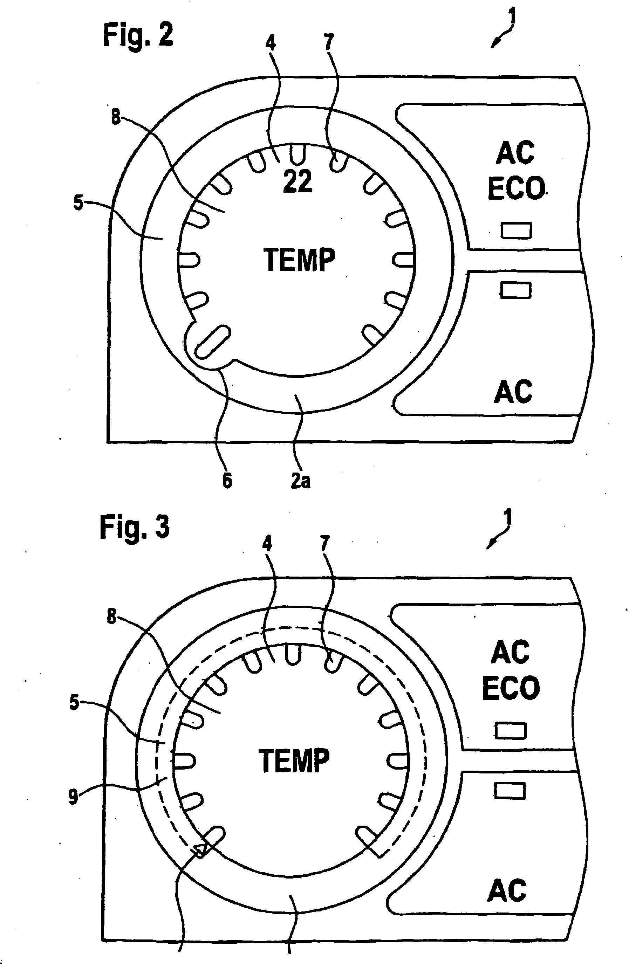

Bezugnehmend auf die Figuren 1 und 2 wird ein erstes Ausführungsbeispiel einer Bedieneinrichtung 1 einer Kraftfahrzeugs-Klimatisierungseinrichtung erfäutert.

In dem in Fig. 1 dargestellten Ausführungsbeispiel, weist eine erfindungsgemäße Bedieneinrichtung 1 zur Einstellung von Zustandsgrößen oder Regelparametem einer Klimaanlage, drei nebeneinander liegende drehbare Bedienelemente (2a, 2b, 2c), die in Form von Drehstellem ausgebildet sind, auf. Jeweils zwischen den Bedienelementen (2a, 2b) und (2b, 2c) befinden sich insgesamt vier Druckschaltknöpfe zur Aktivierung weiterer Funktionen der Klimaanlage. Jedem der ringförmig ausgebildeten Bedienelemente (2a, 2b, 2c) ist ein Markierungsbereich 4 und ein Positionierungsbereich 5 zugeordnet, wobei der Markierungsbereich 4 sich als ein im Inneren der ringförmigen Bedienelemente (2a, 2b, 2c) befindlicher kreisringförmiger Bereich und der Positionierungsbereich 5 sich als eine im Wesentlichen kreisringförmige Fläche im Bereich der Bedienelemente (2a, 2b, 2c) darstellt Der Markierungsbereich 4 wird dabei nach außen vom Bedienelement (2a, 2b, 2c) begrenzt beziehungsweise berandet, wobei sich unmittelbar an diesen, der Positionierungsbereich 5 anschließt, so dass dieser durch das Bedienelement (2a, 2b, 2c) nach innen abgegrenzt wird. Der Markierungs- 4 und der Positionierungsbereich 5 bilden somit zueinander konzentrische Ringe und werden mittels einer nicht in der Figur dargestellten Vorrichtung zur Beleuchtung mit Licht versorgt.

Von den dargestellten Bedienelementen (2a, 2b, 2c) für die von einem Fahrzeuginsassen wählbaren Parameter der Klimatisierungseinrichtung dient der Drehsteller 2a zur Einstellung einer gewünschten Temperatur, der Drehsteller 2b zur Einstellung einer Gebläsestärke und der Drehsteller 2c zur Wahl eines bevorzugten Ausströmbereiches wie beispielsweise den Fußraum-, den Kopf- oder dem Frontscheibenbereich eines Kraftfahrzeugs. Der Drehsteller 2a ist in der Stellung minimaler Temperatur gezeichnet und kann durch Drehung im Uhrzeigersinn bis zu einem Endanschlag in eine Stellung maximaler Temperatur bewegt werden. Für den Drehsteller 2b gilt analoges hinsichtlich der Wahl einer minimalen und maximalen Gebläsestärke. Nicht explizit dargestellt sind weitere optionale Bedienelemente wie ein Drehsteller zur Einstellung der Ausstromungscharakteristik, beispielsweise zur Veränderung einer weitestgehend gerichteten Ausströmung bis hin zu einer maximal diffusen Luftausströmung.

Die Bedienelemente (2a, 2b, 2c) weisen eine lichtundurchlässige ringförmige Fläche auf, die jeweils mit einer Ausnehmung 6, deren Stellung einer gewählten Einstellung des entsprechenden Bedienelements (2a, 2b, 2c) entspricht, versehen sind. Dies ist insbesondere in Fig. 2 zu erkennen, die einer vergrößerten Ansicht des in Fig. 1 dargestellten Bedienelements 2a zur Temperaturwahl, entspricht.

In der Grundplatte 8 der Bedienungseinrichtung 1 sind eine Mehrzahl von Fenstern 7 im sichtbaren Abdeckbereich der Bedieneinrichtung 1 angeordnet, die sich im Innenbereich des ringförmigen Bedienelements (2a,2b,2c) befinden und sich im Wesentlichen in radialer Richtung erstrecken. Die Fenster 7 sind aus einem lichtdurchlässigen Material gefertigt und ragen jeweils zur Hälfte in den Markierungsbereich 4 und in den Positionierungsbereich 5. Die Fenster 7 sind im dargestellten Ausführungsbeispiel einteilig ausgeführt, können aber auch zweiteilig insbesondere in unterschiedlichen Farben ausgeführt sein. Mittels einer hinsichtlich der Bedienungseinrichtung 1 ortsfesten nicht dargestellten Beleuchtungsvorrichtung werden die ebenfalls ortsfesten Fenster 7 direkt oder indirekt, beispielsweise über Lichtleiter oder Lichtfasem, mit Licht versorgt.

Für ein Bedienelement (2a, 2b, 2c) sind ein oder mehrere Beleuchtungsmittel vorgesehen. Als Beleuchtungsmittel kommen beispielsweise Leuchtdioden oder kleine Glühlampen zum Einsatz, wobei, insbesondere falls diese unterschiedliche Bedienelemente beleuchten, die Lichtzufuhr über Lichtleiter oder sonstige Umlenkelemente erfolgen kann.

Bei beleuchtetem Bedienelement (2a, 2b, 2c) ist für einen Fahrzeuginsassen der gesamte Markierungsbereich 4 und damit die in diesem Bereich liegenden Fensterteile sichtbar, beziehungsweise beleuchtet, so dass der gesamte Einstellbereich des Bedienelements (2a, 2b, 2c) auch bei Dunkelheit für einen Fahrzeuginsassen gut zu erkennen ist. Die Teile der Fenster 7 sind im Positionierungsbereich 5 jedoch nur im Bereich der Ausnehmung 6 des Bedienelements (2a, 2b, 2c) sichtbar, so dass die aktuelle Einstellung des Bedienelements (2a, 2b, 2c) anhand des durch die Ausnehmung 6 freigegebenen und somit lichtdurchlässigen Teils des Fensters 7 zu erkennen ist und das ringförmige Bedienelement (2a, 2b, 2c) den übrigen Positionierungsbereich 5 lichtdicht abdeckt. Dieser Abdeckbereich ändert sich mit der Verstellung des Bedienelements (2a, 2b, 2c) und gibt entsprechend der Einstellung einen Bereich frei. Die dargestellte halbkreisförmige Form der Ausnehmung 6 ist nur beispielhaft zu verstehen, diese könnte insbesondere auch drei-, viereckig, pfeilförmig oder in beliebiger anderer Form ausgeführt sein.

In Fig.1 ist auch ersichtlich, dass innerhalb der Bedienelemente (2a, 2b, 2c) Symbole, Beschriftungen und/oder Zahlenwerte, die mit der Funktion des jeweiligen Bedienelements (2a, 2b, 2c) verbunden sind, angeordnet sind. Es ist selbstverständlich, dass auch in diesen Bereichen Fenster bzw. lichtdurchlässige Bereiche für eine Beleuchtung der entsprechenden Objekte vorgesehen sein können.

Fig. 3 zeigt einen Ausschnitt eines weiteren Ausführungsbeispiels für eine erfindungsgemäße Bedienungseinrichtung 1. Das ringförmige Bedienelement 2a weist als Ausnehmung 6 einen geschlossenen Durchbruch in Form eines Dreiecks oder Pfeils auf, wobei beliebige andere Formen denkbar sind. Im Unterschied zum in Fig. 2 dargestellten Ausführungsbeispiel ist der Positionierungsbereich 5 bis auf einen Kreisringsektor mit einem Öffnungswinkel von ca. 75° im unteren Bereich im unteren zentralen Bereich des Bedienelements 2a mit einem lichtdurchlässigen und beleuchteten 5ektorfenster 9 versehen (in Fig. 3 gestrichelt dargestellt). Die Einstellung des Bedienelements 2a wird nunmehr durch Licht, dass aus der dreieckigen Ausnehmung austreten kann angezeigt Diese Ausführungsform ist bevorzugt für stufenlos einstellbare Bedienelemente, vorteilhaft einsetzbar.

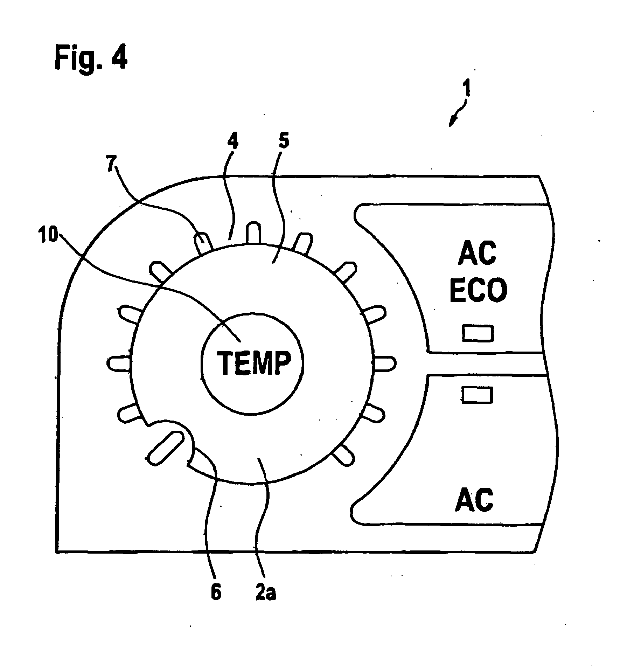

Fig. 4 zeigt ein weiteres alternatives Ausführungsbeispiel mit einem Markierungsbereich 4, der zwar ebenfalls konzentrisch zu einem Positionierungsbereich 5 angeordnet ist, jedoch außenseitig an diesen anschließt. Das Bedienelement 2a berandet im Gegensatz zu den zuvor beschriebenen Ausführungsbeispielen den Markierungsbereich 4 an seiner Innenseite. Die Teile der Fenster 7 sind im Positionierungsbereich 5 wiederum nur im Bereich der Ausnehmung 6 des Bedienelements 2a sichtbar, so dass die aktuelle Einstellung des Bedienelements 2a anhand des durch die Ausnehmung 6 freigegebenen und somit lichtdurchlässigen Teils des Fensters 7 zu erkennen ist und das ring-, oder scheibenförmige Bedienelement 2a den übrigen Positionierungsbereich 5 lichtdicht abdeckt. Dieser Abdeckbereich ändert sich mit der Verstellung des Bedienelements 2a und gibt entsprechend der Einstellung einen Bereich frei. Das Bedienelement 2a kann in seinem Inneren mit einem lichtdurchlässigen Fenster 10 oder generell in Form eines Kreisringes ausgebildet sein um beispielsweise ein Symbol oder eine Beschriftung, die optional auch beleuchtet sind nicht abzudecken.

### Bezugszeichenliste

- 1: Bedieneinrichtung
- 2a, 2b, 2c: Bedienelement
- 3: Druckschalterknöpfe
- 4: Markierungsbereich
- 5: Positionierungsbereich
- 6: Ausnehmung
- 7: Fenster
- 8: Grundplatte
- 9: Sektorfenster
- 10: Fenster

## Patentansprüche

1. Bedieneinrichtung (1), insbesondere für eine Kraftfahrzeug-Belüftungs-, Heizungs-, und/oder Klimatisierungseinrichtung mit mindestens einem, bewegbaren Bedienelement (2a, 2b, 2c) zur Einstellung einer Zustandsgröße, wobei dem Bedienelement (2a, 2b, 2c) ein Markierungsbereich (4) und ein Positionierungsbereich (5), sowie eine Vorrichtung zur Beleuchtung dieser Bereiche (4, 5) zugeordnet sind, wobei das Bedienelement (2a, 2b, 2c) den Positionierungsbereich (5) teilweise abdeckt, **dadurch gekennzeichnet, dass** die Vorrichtung zur Beleuchtung eine Mehrzahl von lichtdurchlässigen Fenstern (7) aufweist, die jeweils flächenübergreifend im Markierungs- und Positionierungsbereich (4, 5) angeordnet sind.

2. Bedieneinrichtung nach Anspruch 1, **dadurch gekennzeichnet, dass** das Bedienelement (2a, 2b, 2c) zumindest einen Teil der Berandung des Markierungsbereichs (4) bildet.

3. Bedieneinrichtung nach Anspruch 1 oder 2, **dadurch gekennzeichnet, dass** das die Vorrichtung zur Beleuchtung bezüglich der Bedieneinrichtung (1) ortsfest angeordnet ist.

4. Bedieneinrichtung nach einem der vorhergehenden Ansprüche, **dadurch gekennzeichnet, dass** das der Markierungsbereich (4) und der Positionierungsbereich (5) konzentrisch zueinander angeordnet sind.

5. Bedieneinrichtung nach einem der vorhergehenden Ansprüche, **dadurch gekennzeichnet, dass** das Bedienelement (2a, 2b, 2c) drehverstellbar ist.

6. Bedieneinrichtung nach einem der vorhergehenden Ansprüche, **dadurch gekennzeichnet, dass** das Bedienelement (2a, 2b, 2c) ringförmig ausgeführt ist.

7. Bedieneinrichtung nach einem der Ansprüche 1 bis 3, **dadurch gekennzeichnet, dass** das der Markierungsbereich (4) und der Positionierungsbereich (5) parallel zueinander angeordnet sind.

8. Bedieneinrichtung nach Anspruch 7, **dadurch gekennzeichnet, dass** das Bedienelement im Wesentlichen geradlinig verstellbar ist.

9. Bedieneinrichtung nach einem der vorhergehenden Ansprüche, **dadurch gekennzeichnet, dass** das Bedienelement (2a, 2b, 2c) zumindest im Positionierungsbereich (5) lichtundurchlässig ist, wobei zumindest in einem Bereich eine Ausnehmung (6) vorgesehen ist, die einen Teil des Positionierungsbereichs (5) freigibt.

10. Bedieneinrichtung nach einem der vorhergehenden Ansprüche, **dadurch gekennzeichnet, dass** die Fenster (7) geteilt ausgeführt sind.

11. Bedieneinrichtung nach einem der vorhergehenden Ansprüche, **dadurch gekennzeichnet, dass** die Fenster (7) aus unterschiedlich gefärbten Materialien, insbesondere Farbfiltern bestehen.

12. Bedieneinrichtung nach einem der vorhergehenden Ansprüche, **dadurch gekennzeichnet, dass** die Breite der Ausnehmung (6) in etwa dem Abstand der lichtdurchlässigen Fenster (7) entspricht.

13. Bedieneinrichtung nach einem der vorhergehenden Ansprüche, **dadurch gekennzeichnet, dass** die Vorrichtung zur Beleuchtung für ein Bedienelement (2a, 2b, 2c) ein Beleuchtungsmittel aufweist.

14. Bedieneinrichtung nach einem der vorhergehenden Ansprüche, **dadurch gekennzeichnet, dass** die Beleuchtung des Markierungs- und Positionierungsbereich (4, 5) eines Bedienelements (2a, 2b, 2c) durch mindestens ein Beleuchtungsmittel über einen gemeinsamen Lichtleiter erfolgt.

15. Bedieneinrichtung nach einem der vorhergehenden Ansprüche, **dadurch gekennzeichnet, dass** die Bedieneinrichtung zumindest ein Bedienelement (2a, 2b, 2c) zur Einstellung folgender Zustandsgrößen aufweist: Temperatur, Gebläsestärke, Ausströmbereich oder die Art der Ausströmung.

16. Kraftfahrzeug- Belüftungs-, Heizungs-, und/oder Klimatisierungseinrichtung mit einer Bedieneinrichtung nach einem der vorhergehenden Ansprüche, **dadurch gekennzeichnet, dass** die Kraftfahrzeug- Belüftungs-, Heizungs-, und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. Control unit, in particular for a ventilation, heating and/or air conditioning unit of a motor vehicle, with at least one movable control (2a, 2b, 2c) for setting a state variable, wherein a marking region (4), a positioning region (5) and a device for illuminating said regions (4, 5) are assigned to the control (2a, 2b, 2c), the control (2a, 2b, 2c) partially covering the positioning region (5), **characterised in that** the illumination device comprises a plurality of transparent windows (7) located in the marking and positioning regions (4, 5) in an area-overlapping manner.

2. Control unit according to claim 1, **characterised in that** the control (2a, 2b, 2c) forms at least a part of the rim of the marking region (4).

3. Control unit according to claim 1 or 2, **characterised in that** the illumination device is stationary relative to the control unit (1).

4. Control unit according to any of the preceding claims, **characterised in that** the marking region (4) and the positioning region (5) are arranged to be concentric relative to one another.

5. Control unit according to any of the preceding claims, **characterised in that** the control (2a, 2b, 2c) is capable of rotary adjustment.

6. Control unit according to any of the preceding claims, **characterised in that** the control (2a, 2b, 2c) is annular.

7. Control unit according to any of claims 1 to 3, **characterised in that** the marking region (4) and the positioning region (5) are arranged to be parallel to one another.

8. Control unit according to claim 7, **characterised in that** thr control is capable of substantially linear adjustment.

9. Control unit according to any of the preceding claims, **characterised in that** the control (2a, 2b, 2c) is transparent at least in the positioning region (5), wherein a recess (6) uncovering a part of the positioning region (5) is provided in at least one region.

10. Control unit according to any of the preceding claims, **characterised in that** the windows (7) are divided.

11. Control unit according to any of the preceding claims, **characterised in that** the windows (7) are made of materials of different colours, in particular colour filters.

12. Control unit according to any of the preceding claims, **characterised in that** the width of the recess (6) approximately corresponds to the spacing of the transparent windows (7).

13. Control unit according to any of the preceding claims, **characterised in that** the illumination device comprises illumination means for the illumination of a control (2a, 2b, 2c).

14. Control unit according to any of the preceding claims, **characterised in that** the illumination of the marking and positioning regions (4, 5) of a control (2a, 2b. 2c) is provided by at least one illumination means via a common optical waveguide.

15. Control unit according to any of the preceding claims, **characterised in that** the control unit comprises at least one control (2a, 2b, 2c) for setting the following state variables: temperature, fan power, outlet region or type of air discharge.

16. Ventilation, heating and/or air conditioning unit of a motor vehicle with a control unit according to any of the preceding claims, **characterised in that** the ventilation, heating and/or air conditioning unit of the motor vehicle includes at least one of the following components: heat exchanger, heater, evaporator, filter, temperature blend damper, combining chamber, one or more flow ducts and one or more control dampers for distributing the air among the outlet passages.

## Revendications

1. Dispositif de commande (1), en particulier pour un système de ventilation, de chauffage et / ou de climatisation d'un véhicule automobile, comprenant au moins un élément de commande mobile (2a, 2b, 2c) servant au réglage d'une grandeur d'état, où sont affectés, à l'élément de commande (2a, 2b, 2c), une zone de marquage (4) et une zone de positionnement (5), ainsi qu'un dispositif d'éclairage de ces zones (4, 5), où l'élément de commande (2a, 2b, 2c) recouvre partiellement la zone de positionnement (5),
**caractérisé en ce que** le dispositif d'éclairage présente une pluralité de fenêtres transparentes (7) qui sont disposées, à chaque fois, à recouvrement de surface, dans la zone de marquage et de positionnement (4, 5).

2. Dispositif de commande selon la revendication 1, **caractérisé en ce que** l'élément de commande (2a, 2b, 2c) forme au moins une partie de la bordure de la zone de marquage (4).

3. Dispositif de commande selon la revendication 1 ou 2, **caractérisé en ce que** le dispositif d'éclairage est disposé en étant fixe par rapport au dispositif de commande (1).

4. Dispositif de commande selon l'une quelconque des revendications précédentes, **caractérisé en ce que** la zone de marquage (4) et la zone de positionnement (5) sont disposées de façon concentrique l'une par rapport à l'autre.

5. Dispositif de commande selon l'une quelconque des revendications précédentes, **caractérisé en ce que** l'élément de commande (2a, 2b, 2c) est réglable par rotation.

6. Dispositif de commande selon l'une quelconque des revendications précédentes, **caractérisé en ce que** l'élément de commande (2a, 2b, 2c) est réalisé de façon annulaire.

7. Dispositif de commande selon l'une quelconque des revendications 1 à 3, **caractérisé en ce que** la zone de marquage (4) et la zone de positionnement (5) sont disposées de façon parallèle l'une par rapport à l'autre.

8. Dispositif de commande selon la revendication 7, **caractérisé en ce que** l'élément de commande est réglable essentiellement de façon linéaire.

9. Dispositif de commande selon l'une quelconque des revendications précédentes, **caractérisé en ce que** l'élément de commande (2a, 2b, 2c) est opaque au moins dans la zone de positionnement (5) où il est prévu, au moins dans une zone, un creux (6) qui dégage une partie de la zone de positionnement (5).

10. Dispositif de commande selon l'une quelconque des revendications précédentes, **caractérisé en ce que** les fenêtres (7) sont réalisées en étant divisées.

11. Dispositif de commande selon l'une quelconque des revendications précédentes, **caractérisé en ce que** les fenêtres (7) se composent de matériaux colorés différemment, en particulier de filtres chromatiques.

12. Dispositif de commande selon l'une quelconque des revendications précédentes, **caractérisé en ce que** la largeur du creux (6) correspond à peu près à l'intervalle des fenêtres transparentes (7).

13. Dispositif de commande selon l'une quelconque des revendications précédentes, **caractérisé en ce que** le dispositif d'éclairage pour un élément de commande (2a, 2b, 2c) comporte un moyen d'éclairage.

14. Dispositif de commande selon l'une quelconque des revendications précédentes, **caractérisé en ce que** l'éclairage de la zone de marquage et de positionnement (4, 5) d'un élément de commande (2a, 2b, 2c) est réalisé par au moins un moyen d'éclairage, via un conducteur optique commun.

15. Dispositif de commande selon l'une quelconque des revendications précédentes, **caractérisé en ce que** le dispositif de commande comporte au moins un élément de commande (2a, 2b, 2c) servant au réglage des grandeurs d'état suivantes : température, force de la soufflante, zone d'évacuation d'air ou le type de l'évacuation d'air.

16. Système de ventilation, de chauffage et / ou de climatisation d'un véhicule automobile, comprenant un dispositif de commande selon l'une quelconque des revendications précédentes, **caractérisé en ce que** le système de ventilation, de chauffage et / ou de climatisation du véhicule automobile comprend au moins l'un des composants suivants : un échangeur de chaleur, un radiateur, un évaporateur, un filtre, un volet mélangeur de température, une chambre de mélange, un ou plusieurs conduits d'écoulement et un ou plusieurs volets de commande pour la répartition de l'air au niveau des conduits de sortie.
